## Europäisches Patentamt

## European Patent Office

## Office européen des brevets

(11) Veröffentlichungsnummer: **0 465 881 B1**

## EUROPÄISCHE PATENTSCHRIFT

(45) Veröffentlichungstag der Patentschrift: **16.08.95**

(51) Int. Cl.6: **G01L 1/22**, G01L 1/26

(21) Anmeldenummer: **91110008.9**

(22) Anmeldetag: **19.06.91**

(54) **Kraftaufnehmer mit Torsionsring.**

(30) Priorität: **22.06.90 US 543046**

(43) Veröffentlichungstag der Anmeldung:
**15.01.92 Patentblatt 92/03**

(45) Bekanntmachung des Hinweises auf die
Patenterteilung:
**16.08.95 Patentblatt 95/33**

(84) Benannte Vertragsstaaten:
**AT CH DE ES FR GB IT LI NL**

(56) Entgegenhaltungen:
**EP-A- 0 288 985**
**EP-A- 0 338 325**
**EP-A- 0 351 006**
**CH-A- 386 728**

(73) Patentinhaber: **HOTTINGER BALDWIN MESS-TECHNIK GMBH**
**Postfach 10 01 51**
**D-64201 Darmstadt (DE)**

(72) Erfinder: **Antkowiak, Joseph H.**
**180 Federal Hill Road**
**Oxford,**
**Massachusetts 01540 (US)**

(74) Vertreter: **Brandt, Ernst-Ulrich, Dipl.-Phys.,**
**Dipl.-Ing.**
**Hottinger Baldwin Messtechnik GmbH**
**Patentabteilung**
**Postfach 10 01 51**
**D-64201 Darmstadt (DE)**

**Beschreibung**

Die Erfindung betrifft einen Kraftaufnehmer mit einem Torsionsring zur Messung von Kraeften in einem weiten Kraftbereich. Aufnehmer dieser Art werden z. B. in der Praxis zum Waegen von Lastkraftwagen und Eisenbahnwagen benutzt. Weitere Anwendungen liegen auf dem Gebiet der Hochleistungsgewichtsueberwachung in der Verfahrenstechnik und auf dem Gebiet der Materialpruefmaschinen.

Aufnehmer der oben genannten Art werden allgemein in einer Broschuere beschrieben unter dem Titel "New Developments in Force Measurement" von Joseph H. Antkowiak und anderen, veroeffentlicht durch Hottinger Baldwin Measurements, Inc. Marlboro, MA 01752. Diese Art von Aufnehmer hat im Hinblick auf seine Struktur und Funktion viele Vorteile, z. B. ein Aufnehmer dieser Art ist hoch-genau, hat eine relativ niedrige Bauhoehe und die zu messende Last oder Kraft kann auf mehreren praktischen Wegen aufgebracht werden. Ausserdem brauchen Aufnehmer dieser Art keine aufwendigen Unterlagen, die zur Aufnahme grosser Momente ausgelegt sein muessen. Trotzdem sind weitere Verbesserungen moeglich, insbesondere im Hinblick auf die Ausschaltung unerwuenschter Montageeinfluesse sowie unerwuenschter Einfluesse, die durch eine exzentrische Lastaufbringung entstehen koennen. Auch die Herstellungskosten lassen sich weiterhin senken.

U. S. Patent 4,811,610 (Gassmann) beschreibt eine Waegezelle, die dem Aufnehmer bzw. der Kraftmessdose, die in dem oben genannten Artikel beschrieben wird, sehr aehnlich ist. Es ist Aufgabe der Gassmann-Offenbarung solche Aufnehmer weiterhin zu verbessern insbesondere im Bezug auf die Empfindlichkeit gegenueber exzentrischen Krafteinleitungen sowie bezueglich Montageeinfluessen. Gassmann moechte seine Aufnehmer gegenueber diesen Einfluessen weniger empfindlich machen. Dieses Ziel wird in der Gassmann-Offenbarung vermutlich dadurch erreicht, dass man eine besonders kleine Stegdicke t relativ zur achsialen Hoehe h des Torsionsringes bzw. des Verformungskoerpers auswaehlt. Diese relativ duennen Stege verbinden den Torsionsring bzw. den Verformungskoerper auf der radial inneren Seite mit dem Krafteinleitungskoerper und auf der radial aeusseren Seite mit einem Ringrahmen des Aufnehmers. Der Aufnehmer gemaess US-Patent 4,811,610 erfordert ferner eine tiefe Nut zwischen dem Torsionsring und dem Ringrahmen, wobei diese tiefe Nut eine enge radiale Breite b zwischen dem Torsionsring und dem Ringrahmen hat. Die Nutbreite b wird relativ zur radialen Breite 1 des Torsionsringes bzw. des Verformungskoerpers bestimmt, bzw. ausgelegt. Die Nut muss tief sein, damit die Forderung erfuellt werden kann, dass die Stegdicke t das Verhaeltnis von 1/6 der Hoehe h des Torsionsringes nicht ueberschreitet. Ferner muss die Nutbreite b weniger als ein Drittel der radialen Breite 1 des Torsionsringes sein.

Die konstruktiven Bedingungen der bekannten Waegezelle sind unerwuenscht, weil selbst moderne Werkzeugmaschinen Schwierigkeiten haben, solche engen, tiefen Nuten zu schneiden, weil die Schneidwerkzeuge selbst bestimmte minimale Dimensionen haben muessen, um die auftretenden Kraefte aufzunehmen. Die Werkzeugdimensionen lassen es normalerweise nicht zu, die engen, tiefen, achsial ausgerichteten Nuten herzustellen, ohne dass spezielle Vorsichtsmassnahmen getroffen werden, wobei wirtschaftliche Schneidgeschwindigkeiten nicht einzuhalten sind.

Obwohl Gassmann die Absicht hatte, variable stoerende Einfluesse, die waehrend der Kraftaufbringung entstehen, sowie Montageeinfluesse im wesentlichen zu beseitigen, ist es doch schwierig, diese Ziele in der Praxis zu erreichen, weil die fuer die Loesung des Problems einzuhaltenden Bedingungen ausschliesslich bei der Konstruktion der Stege, die den Torsionsring im Rahmen halten, zu beruecksichtigen sind. Die vorliegende Erfindung beruht auf die Erkentnis, dass Aenderungen der Steg- und Nutdimensionen ihre Grenzen bezueglich der Entkopplungseigenschaften haben, und zwar im Hinblick auf die oben genannten Bearbeitungsprobleme.

Montageeinfluesse bzw. "Variablen" sind Einfluesse, die das Messergebnis aendern, so dass es schwierig ist, staendig wiederholbare Ergebnisse zu erzielen, wenn dasselbe Aufnehmermodell auf verschiedenen Unterlagen montiert ist, oder sogar dann, wenn bei derselben Montage zu verschiedenen Zeiten die Montageschrauben nicht alle gleichmaessig fest angezogen sind. Aehnlich unregelmaessige Messergebnisse werden erzielt, wenn die Montageauflageflaechen verschiedene Oberflaecheneigenschaften haben, z. B. verschiedene Rauhigkeiten oder die Oberflaechen sind nicht genau eben.

Im Hinblick auf die obigen Ausfuehrungen ist es Aufgabe der Erfindung, einen Aufnehmer zu schaffen, bei dem die genannten Montageeinfluesse wesentlich daran gehindert werden, die Messergebnisse in unerwuenschter Weise zu beeinflussen, wobei nicht von bestimmten Steg- und Nutdimensionen ausgegangen werden soll. Gegenueber exzentrischer Last bzw. Krafteinleitung soll der Aufnehmer nach der Erfindung weniger empfindlich sein, insbesondere durch einen Ausgleich der Zug- und Druckspannungen im Aufnehmer, so dass eine hinreichende Unempfindlichkeit gegenueber einer exzentrischen Krafteinleitung erzielt wird.

Die der Erfindung zugrundeliegende Aufgabe wird bei einem Aufnehmer der eingangs genannten Art zur Messung von Kraeften in einem Sollbereich mit einer obigen Maximalgrenze der zulaessigen Belastung dadurch geloest, dass eine Vorrichtung zur Entkopplung von Montageeinfluessen zwischen einem Ringrahmen und einem Montagefuss des Aufnehmers angeordnet ist, wobei ein Ende der Entkopplungsvorrichtung mit dem Ringrahmen und das andere Ende der Entkopplungsvorrichtung mit dem Montagefuss verbunden ist, um Montageeinfluesse vom Torsionsring fernzuhalten. Der Torsionsring eines Kraftaufnehmers ist so wirksam von seinem Montagefuss entkoppelt, ohne eine Entkopplung vom Aufnehmerrahmen, so dass konsistente Messergebnisse erzielt werden. Die Entkopplungsvorrichtung hindert Kraefte, die nicht zu den zu messenden Kraeften gehoeren, und Montageeinfluesse daran, den Torsionsring zu erreichen. Solche Montageeinfluesse resultieren aus der Tatsache, dass der Montagefuss auf einer Unterlage oder einem Traeger befestigt werden muss. Die Ausschaltung dieser Einfluesse ist deshalb wuenschenswert, weil diese Einfluesse die Messergebnisse in unerwuenschter Weise beeinflussen. Mit der Erfindung ist sichergestellt, dass keine Herstellungsschwierigkeiten entstehen und dass ohne weiteres vorhandene Werkzeugmaschinen benutzt werden koennen, die eine wirtschaftliche Schneidgeschwindigkeit anwenden, ohne dass die Werkzeuge besondere Bedingungen zu erfuellen haben. Ferner weist der erfindungsgemaesse Aufnehmer eine niedrigere Bauhoehe sowie ein wesentlich verringertes Gewicht auf, wenn man den erfindungsgemaessen Aufnehmer mit herkoemmlichen Aufnehmern vergleichbarer Messleistung vergleicht.

Eine bevorzugte Ausfuehrungsform gemaess der Erfindung sieht als Entkopplungsvorrichtung einen Ringzylinder vor, der eine spezielle achsiale Wandlaenge und eine bestimmte Wanddicke hat. Ein Ende des Entkopplungsringzylinders ist wirksam mit dem Montagefuss des Aufnehmers verbunden waehrend das andere Zylinderende fest mit dem aeusseren Ringrahmen des Aufnehmers verbunden ist. Der Torsionsring wird durch die zu messende Last verformt. Zu diesem Zweck wird der Torsionsring von zwei Ringstegen konzentrisch zwischen dem aeusseren Ringrahmen und einem inneren Lasteinleitungskoerper gehalten. Der Entkopplungsringzylinder hat eine achsiale Wandlaenge $W_\ell$ und eine radiale Zylinderwandstaerke $W_t$. Diese Laenge und Wandstaerke sind so ausgewaehlt, dass das Verhaeltnis $W_\ell:W_t$ in einem Bereich liegt, dessen obere Grenze ausreicht, um ein Knicken des Ringzylinders zu vermeiden, wenn die maximal zulaessige Belastung aufgebracht wird. Diese maximal zulaessige Belastung wird durch die vorgegebene Sollbelastung des betreffenden Aufnehmers bestimmt. Die Laenge und Wandstaerke werden ferner durch einen unteren Grenzwert bestimmt, der es noch im wesentlichen sicherstellt, dass die Montageeinfluesse, die am Montagefuss wirksam sind, den Torsionsring nicht erreichen koennen.

Mit dem Entkopplungsringzylinder ist sichergestellt, dass die Montageeinfluesse, die durch das Befestigen des Montagefusses des Aufnehmers oder der Kraftmessdose an einer Unterlage bzw. auf einem Traeger entstehen, nicht in der Lage sind, die Messergebnisse in unerwuenschter Weise zu beeinflussen, so dass konsistente, genaue Messergebnisse erzielt werden, im wesentlichen unabhaengig von der Art der Montage. Erzielt wird das in ueberraschend einfacher Weise, da die Bearbeitung des Entkopplungsringzylinders besonders einfach mit herkoemmlichen Werkzeugen und mit wirtschaftlichen Schnittgeschwindigkeiten durchgefuehrt werden kann. Dies ist deshalb moeglich, weil enge, tiefe Nuten vermieden werden und weil die Schnittwerkzeuge direkten Zugang zu den zu bearbeitenden Oberflaechen haben, wobei genuegend Platz fuer die Werkzeuge vorhanden ist, z. B. auf der Innenseite ist direkter Zugang durch ein grosses Loch im Montagefuss gewaehrleistet.

Weitere Vorteile der Erfindung werden darin gesehen, dass eine ueberraschende Gewichtsverminderung im Bereich von 50 bis 75% erzielt wurde im Vergleich zu herkoemmlichen Aufnehmern vergleichbarer Sollkapazitaet. Ferner werden genauere Messergebnisse erzielt als es herkoemmlich moeglich war. Die Nichtlinearitaet an den Ausgaengen des Aufnehmers wurde von 0,02% auf 0,006% reduziert. Die Hysterese ist von 0,02% auf 0,007% reduziert worden. Die oben erwaehnte Gewichtsverminderung in Kombination mit den einfacheren Bearbeitungsbedingung reduziert die Herstellungskosten wesentlich. Es ist ueberraschend, dass ein Aufnehmer, der weniger kostet, genauere Messergebnisse erzielt im Vergleich zu wesentlich teueren herkoemmlichen Aufnehmern derselben Sollkapazitaet.

Zum besseren Verstaendnis soll die Erfindung nun unter Bezugnahme auf die beigefuegten Zeichnungen naeher beschrieben werden.

Es zeigen:

Fig. 1    eine Schnittansicht durch einen herkoemmlichen Aufnehmer gemaess dem U. S. Patent 4,811,610 (Gassmann);

Fig. 2    eine Schnittansicht aehnlich wie Fig. 1, aber von einem erfindungsgemaessen Aufnehmer;

Fig. 3    eine Ansicht aehnlich wie in Fig. 2, teilweise weggebrochen, um die Torsionsringoberflaechen zu zeigen, wie sie erfindungsgemaess ausgestaltet worden sind, um eine verbesserte Anbringung der Dehnungsmesstreifen auf diesen Torsionsringoberflaechen zu gewaehrleisten;

Fig. 3A     zeigt ein Diagramm, in dem die Spannung als Funktion der Position der Dehnungsmesstreifen auf den Oberflaechen des Torsionsringes gemaess Fig. 3 angedeutet werden im Vergleich zu herkoemmlichen Ringoberflaechen; und

Fig. 4     eine Schnittansicht, aehnlich wie in Fig. 3, jedoch einer anderen Ausfuehrungsform in der Konstruktion des Torsionsringes mit Ringabschnitten, die verschiedene Laengen bzw. Hoehen ueber und unter einer neutralen Ebene haben.

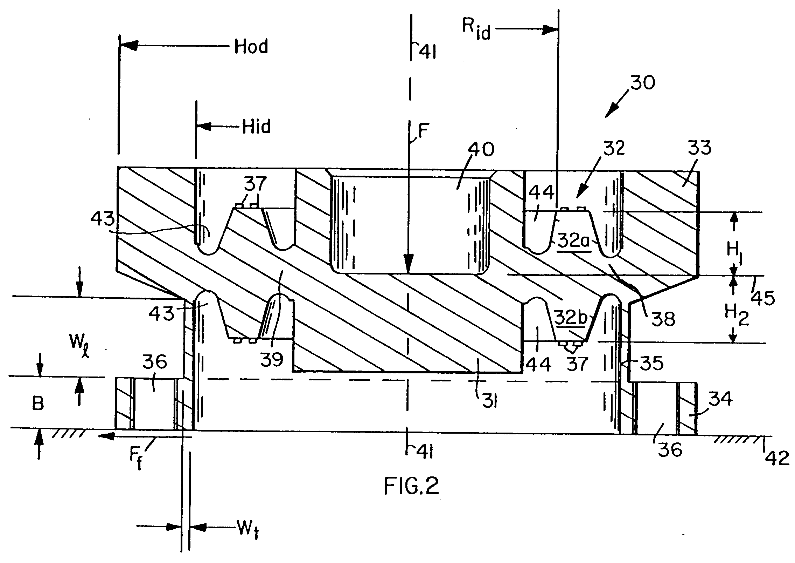

Fig. 1 entspricht der Fig. 1 des U. S. Patentes 4,811,610 (Gassmann) und zeigt einen ringfoermigen Aufnehmer oder Waegezelle 10 zur Messung von Kraeften in einem Sollbereich mit einer oberen Maximalgrenze der zulaessigen Belastung. Der Aufnehmer 10 hat einen Ringrahmen 12, in dem ein Lasteinleitungskoerper 11 zentrisch angeordnet ist, wobei ein Deformationen aufnehmender Torsionsring 13 mit Oberflaechen zur Aufnahme von Dehnungsmesstreifen konzentrisch zwischem dem Ringrahmen 12 und dem Lasteinleitungskoerper 11 durch einen ersten radial inneren Kraftuebertragungssteg 14 und durch einen zweiten radial aeusseren Kraftuebertragungssteg 14' gehalten ist. Damit wird der Torsionsring 13 durch die Stege 14 und 14' konzentrisch im Ringrahmen 12 gehalten. Die soeben beschriebenen Elemente werden aus einem Vollzylinderblock herausgearbeitet. Eine zentrale Rotationsachse 21' verlaeuft vertikal und zentral durch den Krafteinleitungskoerper 11.

Eine neutrale Ebene 21 verlaeuft senkrecht zu der zentralen Achse 21' und zentral durch die Stege 14 , 14'. Eine achsial nach oben schauende Oberflaeche 19 des Torsionsringes 13 traegt die Dehnungsmesstreifen 22. Eine achsial nach unten schauende Oberflaeche 20 des Torsionsringes 13 traegt die Dehnungsmessstreifen 23.

Die kraftuebertragenden Stege 14, 14' werden durch zwei radial aeussere Nuten 15 und 16 sowie durch zwei radial innere Nuten 17 und 18 gebildet. Die Nuten 15 und 17 oeffnen sich nach oben waehrend die Nuten 16 und 18 nach unten offen sind.

Gemaess der Gassmann Lehre ist es notwendig, dass zumindest die radial aeusseren Nuten 15 und 16 tief und eng sind, um den erwuenschten Entkopplungseffekt zu erzielen. Zu diesem Zweck ist mindestens fuer den radial aeusseren Steg 14' eine achsiale Dicke t vorgesehen, die nicht mehr als ein Sechstel der Hoehe h des Torsionsringes 13 betraegt. Ferner muss gemaess Gassmann die Bedingung erfuellt sein, dass die Weite b der Stege in der radialen Richtung hoechstens ein Drittel der Weite 1 des Torsionsringes 13 in der radialen Richtung entspricht. Die radiale Weite b der Stege entspricht in der radialen Richtung der Breite der Nuten 15 und 16. Diese beiden Bedingungen haben die oben erwaehnten tiefen und engen Nuten zur Folge, selbst wenn die Form des Torsionsringes 13 geaendert wird.

Die Erfindung beruht auf der Erkenntnis, dass die Entkopplung des Aufnehmersensorringes von dem Montagefuss nicht unbedingt durch spezielle Dimensionen der Stege, die den Torsionsring mit dem Rahmen verbinden, erreicht werden muss. Der Erfinder hat vielmehr festgestellt, dass eine wirksamere Entkopplung mit besserem Wirkungsgrad erzielt werden kann, wenn man den Ringrahmen von dem Montagefuss entkoppelt.

Fig. 2 zeigt einen ringfoermigen Aufnehmer 30 mit einem Krafteinleitungskoerper 31, einem Torsionsring 32, einem Ringrahmen 33, einem Montagefuss 34 und einer Entkopplungsvorrichtung 35. Vorzugsweise ist die Entkopplungsvorrichtung 35 ein Ringzylinder, der den Montagefuss 34 mit dem Ringrahmen 33 wirksam verbindet, jedoch gleichzeitig die Aufnehmerstruktur einschliesslich des Ringrahmens 33 von aeusseren Einfluessen, einschliesslich und insbesondere Montageeinfluessen entkoppelt, wenn der Montagefuss 33 auf einer Unterlage 42 befestigt wird, z. B. durch Gewindebolzen, die nicht gezeigt sind, aber durch die Montageloecher 36 im Montagefuss 34 gehen.

Der Torsionsring 32 traegt auf seinen achsial nach oben und achsial nach unten schauenden Oberflaechen die Dehnungsmesstreifenelemente 37. Ferner ist der Torsionsring 32 durch einen radial aeusseren Steg 38 mit dem Ringrahmen 33 verbunden. Der Torsionsring 32 ist ferner mit dem Krafteinleitungskoerper 31 durch einen radial inneren Steg 39 verbunden. Der Krafteinleitungskoerper 31 ist z. B. mit einer Krafteinleitungsausnehmung 40 versehen, die konzentrisch relativ zur zentralen Rotationsachse 41 angeordnet ist. Eine Kraft F wird in den Krafteinleitungskoerper 31 mit Hilfe einer nicht dargestellten Stange eingeleitet, die in die Ausnehmung 40 eingreift. Statt der Krafteinleitungsausnehmung 40 kann der Koerper 31 auch mit einer Krafteinleitungsstange versehen sein, die konzentrisch relativ zur zentralen Rotationsachse 41 angeordnet ist. So eine Stange kann z. B. mit einem aeusseren Gewinde versehen sein, um die Stange mit einer Kraftaufbringungsvorrichtungzu verbinden. In beiden Faellen, naemlich mit der Ausnehmung und mit der Krafteinleitungsstange, wird die Kraft F, die gemessen werden soll, so koaxial wie nur irgend moeglich, eingeleitet, relativ zur zentralen Rotationsachse 41, um Effekte, die durch eine exzentrische Krafteinleitung verursacht werden, minimal zu halten.

Es ist der Hauptzweck der Erfindung, aeussere oder Fremdkraefte, insbesondere Montagekraefte, die auftreten, wenn der Montagefuss 34 auf einer Unterlage 42 befestigt wird, daran zu hindern, den

Deformationssensorring mit seinen Dehnungsmessstreifen 37 unguenstig zu beeinflussen. Dieser Zweck wird in einer ueberraschend einfachen Weise durch die oben beschriebene Entkopplungsvorrichtung 35 erzielt, dessen unteres Ende steif mit dem Montagefuss 34 und dessen oberes Ende mit dem Ringrahmen 33 verbunden ist. Vorzugsweise werden der Ringrahmen 33, die Entkopplungsvorrichtung 35 in der Form eines Ringzylinders, und der Montagefuss 34 sowie der Koerper 31, der Torsionsring und die Stege 38 sowie 39 als eine integrale Struktur aus einem entsprechenden zylindrischen Werkstueck herausgearbeitet, wobei relativ einfache Bearbeitungsvorgaenge auf einer drehbankartigen Werkzeugmaschine durchgefuehrt werden. Erfindungsgemaess brauchen die radial aeusseren Nuten 43, die den Steg 38 bilden, und die radial inneren Nuten 44, die den Steg 39 bilden, nicht besonders tief zu sein. Auch brauchen diese Nuten nicht besonders eng zu sein. Damit ergibt sich genuegend Platz fuer die Bearbeitung der radial inneren Oberflaeche des Entkopplungsringzylinders 35. Die radial aeussere Oberflaeche des Zylinders 35 ist in aehnlicher Weise leicht zugaenglich fuer ein entsprechendes Bearbeitungswerkzeug.

Der Entkopplungsringzylinder 35 nach der Erfindung hat eine achsiale Wandlaenge $W_\ell$ und eine radiale Zylinderwandstaerke $W_t$, die so ausgewaelt werden, dass das Verhaeltnis von $W_\ell$ zu $W_t$ innerhalb eines Bereiches liegt, dessen obere Grenze ausreicht, um ein Knicken des Entkopplungsringzylinders 35 zu vermeiden, wenn die maximal zulaessige Last eingeleitet wird, bzw. wenn die Sollastkapazitaet RC ausgenutzt wird. Diese Dimensionen $W_\ell$ und $W_t$ werden ferner so ausgewaehlt, dass die untere Grenze weiterhin im wesentlichen Montageeinfluesse und Fremdkraefte vom Torsionsring 32 fernhaelt.

Es ist ferner im Rahmen der erfindungsgemaessen Lehre diese Dimensionen $W_\ell$ und $W_t$ so auszuwaehlen, dass die Bedingung: $F_f < \mu \cdot RC$ erfuellt ist, wobei $F_f$ eine Kraft darstellt, die ausreicht, den Montagefuss 34 auf einer Unterlage 42 gegen Gleiten festzuhalten, wobei $\mu$ ein Reibbeiwert zwischen dem Montagefuss und der Unterlage darstellt und wobei RC die oben genannte maximal zulaessige Sollast bzw. die zulaessige Sollkapazitaet darstellt. Durch Einhaltung dieser Bedingung ist es sichergestellt, dass der Montagefuss 34 nicht relativ zur Unterlagen 42 gleiten kann.

Die folgenden Verhaeltnisse bestehen fuer drei praktische Ausfuehrungsformen, die aus Stahl hergestellt werden, der einen Reibbeiwert $\mu = 0,3$ hat.

| SOLLMESSKAPAZITÄT (RC) | $W_\ell/W_t$ | $F_f$ | $F_f/RC$ |
|---|---|---|---|
| 20k (9072 kg) | 7,5 | 2291 kg | 0,2525 |
| 50k (22680 kg) | 10,7 | 3778 kg | 0,1666 |
| 100 k (45360 kg) | 4,924 | 9367 kg | 0,2065 |

wobei $F_f/RC$ gleich dem Reibwert $\mu$ oder kleiner als der Reibwert $\mu$ sein soll. Ein praktischer Bereich fuer das Verhaeltnis $W_\ell/W_t$ liegt zwischen etwa 4 und etwa 15.

Gemaess Fig. 2 hat der Ringrahmen 33 einen aeusseren Durchmesser $H_{od}$ und einen inneren Durchmesser $H_{id}$, waehrend der Montagefuss 34 eine Fusshoehe B hat. Die soeben genannten Dimensionen und die oben erwaehnte axiale Zylinderwandlaenge $W_\ell$ des Ringzylinders 35 werden nach der Finiten Elemente Methode variiert, bis die Bedingung $F_f < \mu \cdot RC$ erfuellt ist.

Der Torsionsring 32 hat auch einen inneren Ringdurchmesser $R_{id}$ und einen oberen Ringabschnitt 32a mit einer achsialen Hoehe $H_1$ und einen unteren Ringabschnitt 32b mit einer achsialen Hoehe $H_2$. Die soeben genannten Dimensionen $R_{id}$, $H_1$ und $H_2$ werden ebenfalls nach der Finiten Elemente Methode variiert, bis die Bedingung $F_f < \mu \cdot RC$ erfuellt ist. Uebrigens, eine neutrale Ebene 45 trennt den oberen Abschnitt 32a des Torsionsringes 32 vom unteren Ringabschnitt 32b, wobei die neutrale Ebene 45 senkrecht zur zentralen Rotationsachse 41 verlaeuft und zentral durch die Stege 38 und 39 geht. Vorzugsweise reicht die Krafteinleitungsausnehmung 40 bis zur neutralen Ebene 45.

Die oben erwaehnte achsiale Wandlaenge $W_\ell$ und die radiale Wandstaerke $W_t$ des Entkopplungsringzylinders 35 werden ferner so gewaehlt, dass $S_{max} < YP/4$ erfuellt ist, wobei $S_{max}$ die maximale Spannung im Entkopplungsringzylinder 35 ist und wobei YP die Reissgrenze des Materials ist, aus dem der Ringzylinder 35 hergestellt ist. Dieses Merkmal hat den Zweck und den Vorteil, die bestmoeglichste Entkopplung zu gewaehrleisten, ohne dass das Material des Aufnehmers seine Festigkeitsgrenze erreicht.

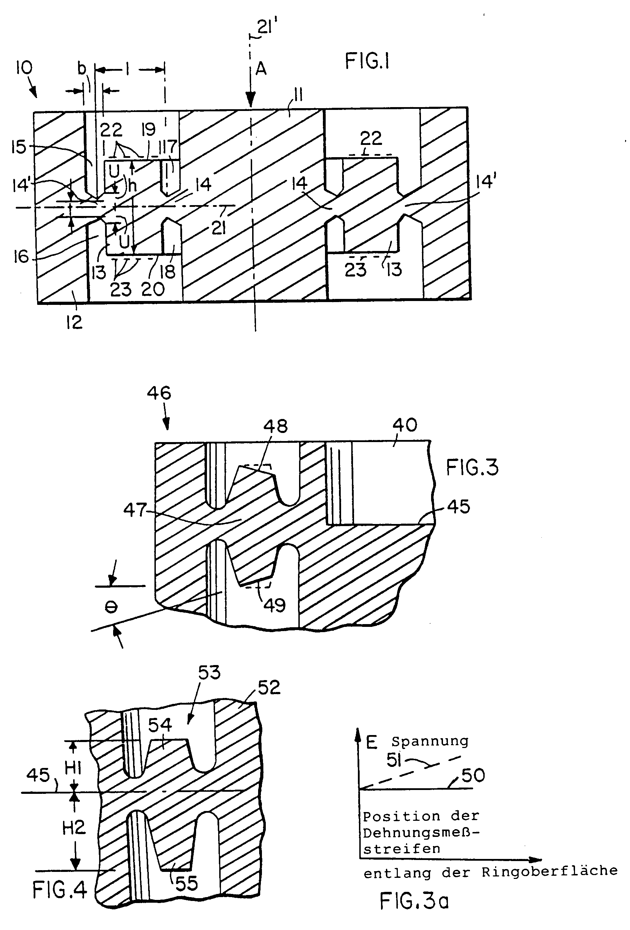

Fig. 3 zeigt einen Ringaufnehmer 46 derselben Konstruktion wie oben unter Bezugnahme auf Fig. 2 beschrieben wurde, einschliesslich des Entkopplungsringzylinders 35. Die Ausfuehrung gemaess Fig. 3 hat jedoch einen geaenderten Torsionsring 47 mit Oberflaechen 48 und 49 zur Befestigung der Dehnungsmesstreifen. Diese Oberflaechen 48 und 49 haben einen Neigungswinkel $\Theta$ zur Horizontalen und sind nach innen zur neutralen Ebene 45 hingeneigt, wobei der Aufnehmer weniger empfindlich gegenueber exzentrischen Krafteinleitungen ist. Diese verbesserte Charakteristik 50 ist in Fig. 3a gezeigt.

Fig. 3a zeigt, dass die geneigten Oberflaechen 48, 49 den Aufnehmer im wesentlichen unempfindlich gegenueber der Position der Dehnungsmessstreifen entlang der geneigten Ringoberflaechen macht, im Vergleich zur gestrichelten dargestellten Charakteristik 51, die sich auf die radial und horizontal verlaufenden Oberflaechen zur Anbringung der Dehnungsmessstreifen bezieht. Diese horizontal und radial verlaufenden Oberflaechen sind in Fig. 3 gestrichelt dargegestellt. Der Ursprung des in Fig. 3a gezeigten Koordinatensystems liegt in der radial aeusseren Kante der geneigten Oberflaechen 48 oder 49. Diese geneigten Oberflaechen 48, 49 verbessern die Funktion des Aufnehmers bezueglich aussermittig eingefuehrten Kraeften und dies ist selbst dann der Fall, wenn waehrend der Herstellung des Aufnehmers die Dehnungsmessstreifen 37 nicht vollstaendig genau auf den betreffenden Oberflaechen 48, 49 plaziert worden sind.

Der Winkel Θ wird so gewaehlt, dass die Aufnehmerempfindlichkeit im wesentlichen unabhaengig von der oben erwaehnten Position der Dehnungsmessstreifen entlang der geneigten Ringoberflaechen ist. Es wurde erfindungsgemaess festgestellt, dass ein Winkel im Bereich von etwa 15 bis 25° das erwuenschte Ergebnis hat.

Fig. 4 zeigt eine Ausfuehrungsform eines ringfoermigen Aufnehmers 52 mit einem Torsionsring 53, der einen oberen Ringabschnitt 54 und einen unteren Ringabschnitt 55 hat. Relativ zur neutralen Ebene 45 haben diese Ringabschnitte verschiedene achsiale Hoehen $H_1$ und $H_2$. Der eine Ringabschnitt, vorzugsweise der obere Ringabschnitt, hat eine Hoehe $H_1$, die kleiner als die Hoehe $H_2$ des unteren Ringabschnittes 55 ist. Dieses Merkmal der Erfindung gleicht Zug- und Druckspannungen aus, die in dem Torsionsring auftreten, wenn eine Last in den Krafteinleitungskoerper eingefuehrt wird.

## Patentansprüche

1. Kraftaufnehmer mit einem Torsionsring (32, 47, 53) zur Messung von Kraeften in einem Sollbereich mit einer oberen Maximalgrenze der zulaessigen Belastung mit einem Ringrahmen (33), in dem ein Lasteinleitungskoerper (31) konzentrisch angeordnet ist, wobei ein Deformationen aufnehmender Torsionsring (32, 47, 53) mit Oberflaechen zur Aufbringung von Dehnungsmessstreifen (37) konzentrisch zwischen dem Ringrahmen (33) und dem Lasteinleitungskoerper (31) durch einen ersten Ringsteg (39) zwischen dem Lasteinleitungskoerper (31) und dem Torsionsring (32, 47, 53) sowie durch einen zweiten Ringsteg (38) zwischen dem Torsionsring (32, 47, 53) und dem Ringrahmen (33) konzentrisch gehalten ist, dadurch gekennzeichnet, dass eine Vorrichtung zur Entkopplung von Montageeinfluessen zwischen dem Ringrahmen (33) und einem Montagefuss (34) des Aufnehmers angeordnet ist, wobei ein Ende der Entkopplungsvorrichtung (35) mit dem Ringrahmen (33) und das andere Ende der Entkopplungsvorrichtung (35) mit dem Montagefuss (34) verbunden ist, um Montageeinfluesse vom Torsionsring (32, 47, 53) fernzuhalten.

2. Aufnehmer nach Anspruch 1, dadurch gekennzeichnet, dass die Entkopplungsvorrichtung (35) ein Ringzylinder ist, der mit seinem einen Ende fest mit dem Montagefuss (34) und mit seinem anderen Ende mit dem Ringrahmen (33) verbunden ist, dass der Entkopplungsringzylinder eine achsiale Wandlaenge ($W_\ell$) und eine radiale Wandstaerke ($W_t$) derart hat, dass das Verhaeltnis ($W_\ell/Wt$) in einem Bereich liegt, dessen obere Grenze eine Knickfestigkeit gewaehrleistet, die ausreicht, um ein Knicken des Entkopplungsringzylinders zu vermeiden, wenn eine maximal zulaessige Soll-Last eingeleitet wird, und dessen untere Grenze es gewaehrleistet, dass Montageeinfluesse vom Torsionsring (32) ferngehalten werden.

3. Aufnehmer nach Anspruch 2, dadurch gekennzeichnet, dass die Zylinderlaenge ($W_\ell$) und die Zylinderwandstaerke ($W_t$) so bestimmt sind, dass die Bedingung ($F_f < \mu \cdot RC$) eingehalten ist, wobei ($F_f$) eine Kraft ist, die ausreicht, den Montagefuss (34) auf einer Auflage (42) festzuhalten, wobei ($\mu$) ein Reibbeiwert zwischen dem Montagefuss (34) und der Auflage (42) ist, und wobei (RC) die maximal zulaessige Soll-Last ist.

4. Aufnehmer nach einem der vorhergehenden Ansprüche, dadurch gekennzeichnet, dass der Ringrahmen (33) einen aeusseren Durchmesser ($H_{od}$) und einen inneren Durchmesser ($H_{id}$) hat, dass der Montagefuss (34) eine Hoehe (B) hat, derart dass Dimensionswerte fuer die Zylinderwandlaenge ($W_\ell$), fuer die Durchmesser ($H_{od}$) und ($H_{id}$) sowie fuer die Hoehe (B) variiert werden, bis die Bedingung ($F_f < \mu \cdot RC$) erfuellt ist.

5. Aufnehmer nach Anspruch 4, dadurch gekennzeichnet, dass der Torsionsring (32, 47, 53) einen inneren Durchmesser ($R_{id}$), einen oberen Ringabschnitt oberhalb einer neutralen Ebene mit einer Hoehe (H1),

6

und einen unteren Ringabschnitt unterhalb der neutralen Ebene mit einer Hoehe (H2) hat, und dass ($R_{id}$, H1 und H2) variiert werden, bis die Bedingung ($F_f < \mu \cdot RC$) erfuellt ist.

6. Aufnehmer nach einem der vorhergehenden Ansprueche, insbesondere nach Anspruch 1, dadurch gekennzeichnet, dass die Laenge ($W_\ell$) und die Wandstaerke ($W_t$) des Entkopplungsringzylinders so gewaehlt sind, dass die Bedingung ($S_{max} < YP/4$) erfuellt ist, wobei ($S_{max}$) die maximale Spannung im Entkopplungsringzylinder ist, und wobei (YP) die Reissgrenze des Materials ist, aus dem der Entkopplungszylinder besteht.

7. Aufnehmer nach einem der vorhergehenden Ansprueche, insbesondere nach Anspruch 1, dadurch gekennzeichnet, dass der Krafteinleitungskoerper (31) eine zentrale Krafteinleitungsausnehmung (40) aufweist.

8. Aufnehmer nach Anspruch 7, dadurch gekennzeichnet, dass die zentrale Krafteinleitungsausnehmung (40) eine Tiefe hat, die bis zu einer neutralen Ebene (45) reicht, wobei die neutrale Ebene (45) senkrecht zur zentralen Rotationsachse (41) des Aufnehmers steht und durch den ersten (39) und zweiten Ringsteg (38) geht.

9. Aufnehmer nach einem der vorhergehenden Ansprueche, insbesondere nach Anspruch 1, dadurch gekennzeichnet, dass der Deformationen aufnehmende Torsionsring (32, 47, 53) eine neutrale Ebene (45) hat, die senkrecht zur zentralen Rotationsachse (41) des Aufnehmers steht und zentral durch den ersten (39) und zweiten Ringsteg (38) geht, und dass der Torsionsring (32, 47, 53) einen oberen Ringabschnitt (32a, 54) oberhalb der neutralen Ebene (45) und einen unteren Ringabschnitt (32b, 55) unterhalb der neutralen Ebene (45) hat.

10. Aufnehmer nach Anspruch 9, dadurch gekennzeichnet, dass einer der beiden Ringabschnitte kuerzer ist als der andere Ringabschnitt betrachtet in Richtung der zentralen Rotationsachse (41).

11. Aufnehmer nach Anspruch 10, dadurch gekennzeichnet, dass der obere Ringabschnitt (54) kuerzer ist als der untere Ringabschnitt (55), um Zugspannungen und Druckspannungen auszugleichen, die im Torsionsring (32) bei Einleitung einer Last in den Krafteinleitungskoerper (31) entstehen.

12. Aufnehmer nach Anspruch 9, dadurch gekennzeichnet, dass die Oberflächen zur Aufbringung der Dehnungsmesstreifen (37) am Torsionsring (47), Ringoberflächen (48, 49) des oberen und des unteren Ringabschnittes sind, und dass die Ringoberflaechen (48, 49) mit einem Winkel ($\theta$) zur Horizontalen geneigt sind und zwar mit einer radial nach innen gerichteten Neigung zur neutralen Ebene (45), wodurch der Aufnehmer weniger empfindlich gegen exzentrische Lasteinleitungen ist.

13. Aufnehmer nach Anspruch 12, dadurch gekennzeichnet, dass der Winkel ($\theta$) im Bereich von etwa 15° bis etwa 25° liegt.

14. Aufnehmer nach Anspruch 12, dadurch gekennzeichnet, dass der Winkel ($\theta$) so gewaehlt ist, dass der Aufnehmer eine Empfindlichkeit hat, die im wesentlichen unabhaengig von der Lage der Dehnungsmesstreifen (37) ist, die auf den geneigten Ringflaechen (48, 49) angebracht sind.

15. Aufnehmer nach Anspruch 2, dadurch gekennzeichnet, dass das Verhaeltnis ($W_\ell / W_t$) im Bereich von etwa vier bis etwa fuenfzehn liegt.

## Claims

1. Force gauge with a torsion ring (32, 47, 53) for measuring forces in a specified range with an upper maximum limit for the permissible loading, with a ring frame (33), in which a load introduction body (31) is concentrically arranged, wherein a torsion ring (32, 47, 53), which picks up deformations and has surfaces for applying wire strain gauges (37), is held concentrically between the ring frame (33) and the load introduction body (31) by a first ring web (39) between the load introduction body (31) and the torsion ring (32, 47, 53) and by a second ring web (38) between the torsion ring (32, 47, 53) and the ring frame (33), characterised in that a device for decoupling mounting effects is arranged between the ring frame (33) and a mounting foot (34) of the gauge, one end of the decoupling device (35) being connected to the ring frame (33) and the other end of the decoupling device (35) being connected to the mounting foot (34) in order to keep mounting effects away from the torsion ring (32, 47, 53).

2. Gauge according to claim 1, characterised in that the decoupling device (35) is a ring cylinder which is firmly connected to the mounting foot (34) at one end and connected to the ring frame (33) at the other, that the decoupling ring cylinder has an axial wall length ($W_l$) and a radial wall thickness ($W_t$) such that the ratio ($W_l/W_t$) lies in a range whose upper limit guarantees a buckling resistance which is sufficient to prevent the decoupling ring cylinder from buckling when a maximum permissible specified load is introduced and whose lower limit guarantees that mounting effects are kept away from the torsion ring (32).

3. Gauge according to claim 2, characterised in that the cylinder length ($W_l$) and the cylinder wall thickness ($W_t$) are determined such that the condition ($F_f < \mu \cdot RC$) is fulfilled, ($F_f$) being a force which is sufficient to retain the mounting foot (34) on a support (42), ($\mu$) being the coefficient of friction between the mounting foot (34) and the support (42), and (RC) being the maximum permissible specified load.

4. Gauge according to any one of the preceding claims, characterised in that the ring frame (33) has an outside diameter ($H_{od}$) and an inside diameter ($H_{id}$) and that the mounting foot (34) is of a height (B) such that dimensional values for the cylinder wall length ($W_l$), for the diameters ($H_{od}$) and ($H_{id}$) and for the height (B) are varied until the condition ($F_f < \mu \cdot RC$) is fulfilled.

5. Gauge according to claim 4, characterised in that the torsion ring (32, 47, 53) has an inside diameter ($R_{id}$), an upper ring portion above a neutral plane of a height (H1) and a lower ring portion below the neutral plane of a height (H2), and that ($R_{id}$, H1 and H2) are varied until the condition ($F_f < \mu \cdot RC$) is fulfilled.

6. Gauge according to any one of the preceding claims, in particular according to claim 1, characterised in that the length ($W_l$) and the wall thickness ($W_t$) of the decoupling ring cylinder are selected such that the condition ($S_{max} < YP/4$) is fulfilled, ($S_{max}$) being the maximum stress in the decoupling ring cylinder and (YP) being the breaking limit of the material of which the decoupling cylinder consists.

7. Gauge according to any one of the preceding claims, in particular according to claim 1, characterised in that the force introduction body (31) comprises a central force introduction recess (40).

8. Gauge according to claim 7, characterised in that the central force introduction recess (40) is of a depth which extends to a neutral plane (45), the neutral plane (45) being perpendicular to the central rotational axis (41) of the gauge and passing through the first (39) and the second ring web (38).

9. Gauge according to any one of the preceding claims, in particular according to claim 1, characterised in that the torsion ring (32, 47, 53) which picks up deformations has a neutral plane (45) which is perpendicular to the central rotational axis (41) of the gauge and passes centrally through the first (39) and the second ring web (38), and that the torsion ring (32, 47, 53) has an upper ring portion (32a, 54) above the neutral plane (45) and a lower ring portion (32b, 55) below the neutral plane (45).

10. Gauge according to claim 9, characterised in that one of the two ring portions is shorter than the other ring portion, viewed in the direction of the central rotational axis (41).

11. Gauge according to claim 10, characterised in that the upper ring portion (54) is shorter than the lower ring portion (55) in order to compensate tensile stresses and compressive stresses arising in the torsion ring (32) when a load is introduced into the force introduction body (31).

12. Gauge according to claim 9, characterised in that the surfaces for applying the wire strain gauges (37) on the torsion ring (47) are ring surfaces (48, 49) of the upper and the lower ring portion, and that the ring surfaces (48, 49) are inclined at an angle ($\Theta$) to the horizontal, this inclination being directed radially inwards towards the neutral plane (45), as a result of which the gauge is less sensitive to eccentric load introductions.

**13.** Gauge according to claim 12, characterised in that the angle ($\Theta$) is between approximately 15° and approximately 25°.

**14.** Gauge according to claim 12, characterised in that the angle ($\Theta$) is selected such that the sensitivity of the gauge is essentially independent of the position of the wire strain gauges (37) which are mounted on the inclined ring surfaces (48, 49).

**15.** Gauge according to claim 2, characterised in that the ratio ($W_l/W_t$) lies within a range from approximately four to approximately fifteen.

## Revendications

**1.** Capteur de force comportant un anneau de torsion (32, 47, 53) destiné d la mesure de forces dans une plage de consigne avec une limite maximale supérieure de la charge admissible, avec un cadre annulaire (33) dans lequel un corps de transmission de charge (31) est monté concentrique, dans lequel un anneau de torsion (32, 47, 53) absorbant les déformations, présentant des surfaces d'application de bandes de mesure d'extension (37) est maintenu concentrique entre le cadre annulaire (33) et le corps de transmission de charge (31) par une première languette d'anneau (39) entre le corps de transmission de charge (31) et l'anneau de torsion (32, 47, 53), ainsi que par une seconde languette d'anneau (38) entre l'anneau de torsion (32, 47, 53) et le cadre annulaire (33), caractérisé en ce qu'un dispositif de désaccouplage des influences du montage est prévu entre le cadre annulaire (33) et un pied de montage (34) du capteur, une extremité du dispositif de désaccouplage (35) étant reliée au cadre annulaire (33) et l'autre extrémité du dispositif de désaccouplage (35), au pied de montage (34), afin de maintenir l'anneau de torsion (32, 47, 53) à l'abri des influences du montage.

**2.** Capteur selon la revendication 1, caractérisé en ce que le dispositif de desaccouplage (35) est un cylindre annulaire qui avec l'une de ses extrémités est relié fixement au pied de montage (34) et avec son autre extrémité, au cadre annulaire (33), en ce que le cylindre annulaire de désaccouplage présente une longueur de paroi axiale ($W_l$) et une épaisseur de paroi radiale ($W_t$) telles que le rapport ($W_l/W_t$) se situe dans une plage dont la limite supérieure garantit une résistance au flambage, suffisante pour éviter un flambage du cylindre annulaire de désaccouplage lorsqu'une charge de consigne maximale admissible est transmise, et dont la limite inférieure garantit que les influences du montage sont maintenues éloignées de l'anneau de torsion (32).

**3.** Capteur selon la revendication 2, caractérisé en ce que la longueur ($W_l$) du cylindre et l'épaisseur ($W_t$) de la paroi du cylindre sont telles que la condition ($F_f < \mu \cdot RC$) soit respectée, ($F_f$) étant une force qui suffit pour maintenir le pied de montage (34) sur un support (42), ($\mu$) étant un coefficient de friction entre le pied de montage (34) et le support (42) et (RC) étant la charge de consigne maximale admissible.

**4.** Capteur selon l'une des revendications précédentes caractérisé en ce que le cadre annulaire (33) présente un diamètre extérieur ($H_{od}$) et un diamètre intérieur ($H_{id}$), en ce que le pied de montage (34) a une hauteur (B) telle que des valeurs dimensionnelles de la longueur ($W_l$) de la paroi du cylindre, des diamètres ($H_{od}$) et ($H_{id}$) ainsi que de la hauteur (B) soient modifiées jusqu'à ce que la condition ($F_f < \mu \cdot RC$) soit satisfaite.

**5.** Capteur selon la revendication 4, caractérisé en ce que l'anneau de torsion (32, 47, 53) présente un diamètre intérieur ($R_{id}$), une partion annulaire supérieure au-dessus d'un plan neutre d'une hauteur (H1), et une partion annulaire inférieure au-dessous du plan neutre d'une hauteur (H2), et en ce que ($R_{id}$, H1 et H2) sont modifiés jusqu'à ce que la condition ($F_f < \mu \cdot RC$) soit satisfaite.

**6.** Capteur selon l'une des revendications précédentes en particulier selon la revendication 1, caractérisé en ce que la longueur ($W_l$) et l'épaisseur ($W_t$) de la paroi du cylindre annulaire de désaccouplage sont choisies telles que la condition ($S_{max} < YP/4$) soit satisfaite, ($S_{max}$) étant la contrainte maximale dans le cylindre annulaire de désaccouplage, et (YP) étant la limite de rupture du matériau dans lequel est réalisé le cylindre de désaccouplage.

7. Capteur selon l'une des revendications précédentes, en particulier selon la revendication 1, caractérisé en ce que le corps de transmission de force (31) présente un évidement de transmission de force (40) central.

8. Capteur selon la revendication 7, caractérisé en ce que l'évidement (40) central a une profondeur qui s'étend jusqu'à un plan neutre (45), le plan neutre (45) étant perpendiculaire à l'axe de ratation (41) central du capteur et passant par la première languette d'anneau (39) et la seconde languette d'anneau (38).

9. Capteur selon l'une des revendications précédentes, en particulier selon la revendication 1, caractérisé en ce que l'anneau de torsion (32, 47, 53), absorbant les déformations, possède un plan neutre (45) qui est perpendiculaire à l'axe de rotation (41) central du capteur et passe par le centre de la première languette (39) et de la seconde languette (38), et en ce que l'anneau de torsion (32, 47, 53) possède une portion (32a, 54) supérieure au-dessus du plan neutre (45) et une partion (32b, 55) inférieure au-dessous du plan neutre (45).

10. Capteur selon la revendication 9, caractérisé en ce que l'une des deux portions de l'anneau est plus courte que l'autre partion, vue dans le sens de l'axe de rotation (41) central.

11. Capteur selon la revendication 10, caractérisé en ce que la partion d'anneau (54) supérieure est plus courte que la partion d'anneau (55) inférieure, afin de compenser des sollicitations en traction et en compression, qui se produisent dans l'anneau de torsion (32) lors de la transmission d'une charge dans le corps de transmission de force (31).

12. Capteur selon la revendication 9, caractérisé en ce que les surfaces d'application des bandes de mesure d'extension (37) sur l'anneau de torsion (47), sont des surfaces annulaires (48, 49) de la partion supérieure et de la portion inférieure de l'anneau et en ce que les surfaces annulaires (48, 49) sont inclinées sous un angle ($\theta$) par rapport à l'horizontale et ce avec une pente dirigée radialement vers l'intérieur par rapport au plan neutre (45), ce qui fait que le capteur est moins sensible aux transmissions de charge excentrées.

13. Capteur selon la revendication 12, caractérisé en ce que l'angle ($\theta$)est compris dans une plage d'environ 15° à environ 25°.

14. Capteur selon la revendication 12, caractérisé en ce que l'angle ($\theta$) est choisi de telle sorte que le capteur ait une sensibilité qui soit sensiblement indépendante de l'emplacement des bandes de mesure d'extension (37) qui sont appliquées sur les surfaces (48, 49) inclinées de l'anneau.

15. Capteur selon la revendication 2, caractérisé en ce que le rapport ($W_\ell/W_t$) se situe dans une plage allant de quatre à environ quinze.

FIG.2

EP 0 465 881 B1

FIG.1

FIG.3

FIG.4

E Spannung

Position der
Dehnungsmeßstreifen

entlang der Ringoberfläche

FIG.3a